(19) **Europäisches Patentamt / European Patent Office / Office européen des brevets**

(11) **EP 4 037 013 A1**

(12) **EUROPEAN PATENT APPLICATION**
published in accordance with Art. 153(4) EPC

(43) Date of publication:
**03.08.2022 Bulletin 2022/31**

(21) Application number: **20901565.0**

(22) Date of filing: **17.12.2020**

(51) International Patent Classification (IPC):
**H01M 4/131** (2010.01)  **H01M 4/48** (2010.01)
**H01M 4/58** (2010.01)  **H01M 4/36** (2006.01)
**H01M 4/62** (2006.01)  **H01M 4/587** (2010.01)
**H01M 10/052** (2010.01)  **H01M 4/02** (2006.01)

(52) Cooperative Patent Classification (CPC):
**H01M 4/02; H01M 4/131; H01M 4/36; H01M 4/48;**
**H01M 4/58; H01M 4/587; H01M 4/62;**
**H01M 10/052; Y02E 60/10**

(86) International application number:
**PCT/KR2020/018535**

(87) International publication number:
**WO 2021/125827 (24.06.2021 Gazette 2021/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.12.2019 KR 20190169170**

(71) Applicant: **LG Energy Solution, Ltd.**
**Seoul 07335 (KR)**

(72) Inventors:
- **PARK, Se Mi**
  **Daejeon 34122 (KR)**
- **LEE, Yong Ju**
  **Daejeon 34122 (KR)**
- **LEE, Su Min**
  **Daejeon 34122 (KR)**
- **KIM, Dong Hyuk**
  **Daejeon 34122 (KR)**

(74) Representative: **Hoffmann Eitle**
**Patent- und Rechtsanwälte PartmbB**
**Arabellastraße 30**
**81925 München (DE)**

(54) **NEGATIVE ELECTRODE, AND SECONDARY BATTERY COMPRISING SAME NEGATIVE ELECTRODE**

(57)    Provided are a negative electrode, which includes a current collector and a negative electrode active material layer disposed on the current collector, wherein the negative electrode active material layer includes a conductive material, a negative electrode active material, and a binder, the negative electrode active material includes a silicon-based active material having an elongation of 0.05 to 0.35 and a circularity of 0.9 to 0.98 as measured using a particle shape analyzer, and the elongation is defined by the following Formula 1, and a secondary battery including the negative electrode.

[Formula 1]

$$\text{Elongation} = 1 - \text{Aspect ratio}$$  [Formula 1]

[FIG. 1]

|  | CIRCULARITY | ELONGATION |
|---|---|---|
| ✸ | 0.47 | 0.24 |
| ⬭ | 0.52 | 0.79 |
| ▬ | 0.47 | 0.82 |

**Description**

[Technical Field]

Cross-Reference to Related Application

This application claims priority to and the benefit of Korean Patent Application No. 10-2019-0169170, filed on December 17, 2019, the disclosure of which is incorporated herein by reference in its entirety.

Technical Field

The present invention relates to a negative electrode having excellent initial efficiency and excellent lifetime characteristics and a secondary battery including the negative electrode.

[Background Art]

With a dramatic increase in the use of fossil fuels, there is an increasing demand for use of alternative energy or clean energy, and power generation and accumulation fields using electrochemical reactions have been most actively studied to meet the increasing demand.

A representative example of the electrochemical device using electrochemical energy includes secondary batteries, and an application area thereof is gradually expanding. Recently, as technology development and demand for portable devices such as portable computers, mobile phones, cameras, and the like increase, demand for secondary batteries as energy sources is sharply increasing.

Secondary batteries generally consist of a positive electrode, a negative electrode, an electrolyte, and a separator. The negative electrode includes a negative electrode active material that allows lithium ions released from the positive electrode to be intercalated and deintercalated.

Meanwhile, to increase battery capacity, a silicon-based active material, for example, $SiO_x$ ($0 \leq x \leq 2$), has been commonly used as a negative electrode active material. A conventionally used silicon-based active material has a high elongation and low circularity. Accordingly, the silicon-based active material is easily damaged (cracked, etc.) during operation of a battery, and thus side reactions with an electrolyte solution excessively take place, leading to the low initial efficiency and deteriorated lifetime characteristics of the battery.

Therefore, a new type of a negative electrode capable of implementing a secondary battery excellent in initial efficiency and lifetime characteristics is required.

[Disclosure]

[Technical Problem]

The present invention is directed to providing a negative electrode including a silicon-based active material capable of improving initial efficiency and lifetime characteristics.

However, the objective of the present invention is not limited to the objective described above, and other objectives not described above will be clearly understood by those skilled in the art from the following description.

[Technical Solution]

One aspect of the present invention provides a negative electrode which includes a current collector and a negative electrode active material layer disposed on the current collector, wherein the negative electrode active material layer includes a conductive material, a negative electrode active material, and a binder, the negative electrode active material includes a silicon-based active material having an elongation of 0.05 to 0.35 and a circularity of 0.9 to 0.98 as measured using a particle shape analyzer, and the elongation is defined by the following Formula 1.

[Formula 1]

$$\text{Elongation} = 1 - \text{Aspect ratio}$$

Another aspect of the present invention provides a secondary battery including the above-described negative electrode.

[Advantageous Effects]

According to the present invention, since a negative electrode includes a negative electrode active material layer including a silicon-based active material having an elongation of 0.05 to 0.35 and a circularity of 0.9 to 0.98, the silicon-based active material can be prevented from being damaged during a roll-pressing process in the manufacture of the negative electrode, and a battery can also be suppressed from being damaged due to the excessive volume expansion of the silicon-based active material during operation of the battery. Accordingly, the initial efficiency and lifetime characteristics of the negative electrode and the battery can be improved.

[Description of Drawings]

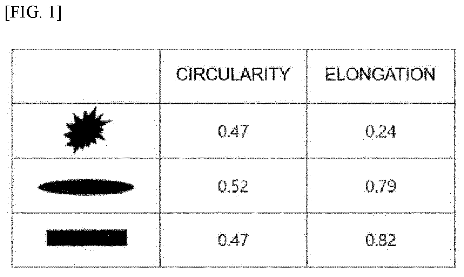

FIG. 1 shows the circularity and elongation of various shapes.

[Modes of the Invention]

Hereinafter, the present invention will be described in more detail to facilitate understanding of the present invention.
Terms and words provided herein should not be interpreted as limited to commonly used meanings or meanings in dictionaries and should be interpreted with meanings and concepts which are consistent with the technological scope of the invention based on the principle that the inventors can appropriately define concepts of terms in order to describe the invention in the best way.
The terminology provided herein is merely used for the purpose of describing exemplary embodiments, and is not intended to be limiting of the present invention. The singular forms "a," "an," and "the" are intended to include the plural forms as well, unless the context clearly indicates otherwise.
It should be understood that the terms "comprises," "comprising," "includes," "including," "has," and/or "having," when used herein, specify the presence of stated features, integers, steps, components, and/or combinations thereof, but do not preclude the presence or addition of one or more other features, integers, steps, components, and/or combinations thereof.
In the present invention, $D_{50}$ may be defined as a particle diameter corresponding to 50% of the cumulative volume in a particle size distribution curve (curve on the graph of a particle size distribution). The $D_{50}$ may be measured, for example, using a laser diffraction method. The laser diffraction method generally allows the measurement of a particle diameter ranging from a submicron level to several millimeters and may produce a result having high reproducibility and high resolution.

**<Negative electrode>**

A negative electrode according to an embodiment of the present invention includes a current collector and a negative electrode active material layer disposed on the current collector, wherein the negative electrode active material layer includes a conductive material, a negative electrode active material, and a binder, the negative electrode active material includes a silicon-based active material having an elongation of 0.05 to 0.35 and a circularity of 0.9 to 0.98 as measured using a particle shape analyzer, and the elongation is defined by the following Formula 1.

[Formula 1]

$$\text{Elongation} = 1 - \text{Aspect ratio}$$

The current collector is not particularly limited as long as it does not cause a chemical change in the battery and has conductivity. For example, copper, stainless steel, aluminum, nickel, titanium, calcined carbon, aluminum or stainless steel whose surface has been treated with carbon, nickel, titanium, silver, or the like, or the like may be used as the current collector. Specifically, a transition metal that satisfactorily adsorbs carbon, such as copper or nickel, may be used as the current collector. The current collector may have a thickness of 6 µm to 20 µm, but the thickness of the current collector is not limited thereto.
The negative electrode active material layer is disposed on the current collector. The negative electrode active material layer may be disposed on at least one surface of the current collector, specifically, on one surface or both surfaces of the current collector.
The negative electrode active material layer may include a conductive material, a negative electrode active material, and a binder.

The conductive material is not particularly limited as long as it does not cause a chemical change in the battery and has conductivity. For example, graphite such as natural graphite, artificial graphite, or the like; carbon black such as acetylene black, Ketjen black, channel black, furnace black, lamp black, thermal black, or the like; a conductive fiber such as carbon fiber, metal fiber, or the like; a conductive tube such as carbon nanotubes or the like; metal powder such as fluorocarbon powder, aluminum powder, nickel powder, or the like; a conductive whisker such as zinc oxide, potassium titanate, or the like; a conductive metal oxide such as titanium oxide or the like; or a conductive material such as a polyphenylene derivative or the like may be used as the conductive material.

The negative electrode active material may include a silicon-based active material having an elongation of 0.05 to 0.35, specifically 0.15 to 0.35, 0.20 to 0.28, or 0.20 to 0.25, and more specifically 0.20 to 0.23, as measured using a particle shape analyzer. In this case, the elongation is defined by the following Formula 1.

[Formula 1]

$$\text{Elongation} = 1 - \text{Aspect ratio}$$

When the elongation of the silicon-based active material is less than 0.05, problems such as cracking of the active material and the like may occur during a roll-pressing process in the manufacture of the negative electrode, and when the elongation thereof exceeds 0.35, a battery may be cracked and broken due to volume expansion during charging and discharging of the battery.

The elongation may be obtained, for example, by dispersing a silicon-based active material sample (1 mm$^3$) under conditions of 4 bar and 10 ms, then capturing silicon-based active material particles as a two-dimensional image, and analyzing the image using a particle shape analyzer (Morphologi 4 commercially available from Malvern Panalytical Ltd.). Also, the elongation may be an elongation corresponding to 50% of the cumulative volume of 10,000 silicon-based active material particles.

The negative electrode active material may include a silicon-based active material having a circularity of 0.9 to 0.98, specifically 0.92 to 0.98, more specifically 0.94 to 0.97, and even more specifically 0.95 to 0.97. When the circularity of the silicon-based active material is less than 0.9, a battery may be cracked and broken due to volume expansion during charging and discharging of the battery, and when the circularity thereof exceeds 0.98, problems such as cracking of the active material in a mixed composition with graphite and the like may occur during a roll-pressing process in the manufacture of the negative electrode.

The circularity may be obtained, for example, by dispersing a silicon-based active material sample (1 mm$^3$) under conditions of 4 bar and 10 ms, then capturing silicon-based active material particles as a two-dimensional image, and analyzing the image using a particle shape analyzer (Morphologi 4 commercially available from Malvern Panalytical Ltd.). Also, the circularity may be a circularity corresponding to 50% of the cumulative volume of 10,000 silicon-based active material particles.

The circularity is a value obtained by dividing the circumference of a circle having an equivalent surface area (A) by an actual perimeter (P), as determined in a two-dimensional image obtained by capturing silicon-based active material particles, and squaring the result. Therefore, when the radius of the circle is r, then A=$\pi r^2$, and the circumference is $2\pi r$. Accordingly, the circularity may be defined by the following Formula 2.

[Formula 2]

$$\text{Circularity (C)} = \left(\frac{2\pi r}{p}\right)^2 = \left(\frac{2\pi}{p} \times \sqrt{\frac{A}{\pi}}\right)^2 = \frac{4\pi A}{p^2}$$

When the silicon-based active material has an elongation of 0.05 to 0.35 and a circularity of 0.9 to 0.98, the active material is hardly deformed during a roll pressing process in the manufacture of the negative electrode, and problems such as cracking, breaking, and the like hardly occur due to uniform volume expansion of the active material during charging and discharging of a battery, and thus the initial efficiency and lifetime characteristics of the negative electrode and a battery can be improved.

The silicon-based active material may have an elongation of 0.15 to 0.35 and a circularity of 0.92 to 0.98. Specifically, the silicon-based active material may have an elongation of 0.2 to 0.28 and a circularity of 0.92 to 0.98. When the elongation and circularity of the silicon-based active material satisfy the above-described ranges, the initial efficiency and lifetime characteristics of a battery can be further improved.

Meanwhile, the circularity (parameter that provides information on the outline and surface roughness of particles) and the elongation (parameter that provides information on the relationship between the length and width of particles and is not affected by the surface roughness of particles) are different parameters, and if the circularity gets closer to 1.0, the elongation does not necessarily get closer to 0. In addition, even when the circularities are the same, the elongation values may be different. For example, referring to FIG. 1 showing the circularity and elongation of various shapes, it can be seen that, even when the circularity increases from 0.47 to 0.52, the elongation does not get closer to 0 but increases from 0.24 to 0.79. Also, it can be seen that, even when the circularities are the same such as 0.47, there are different elongation values such as 0.24 and 0.82.

The silicon-based active material may be prepared by processing a Si-containing material through a typical pulverization or size classification method known in the art, for example, by using a ball mill, a sieve, or the like. Specifically, the silicon-based active material may be prepared by pulverizing a Si-containing material using a ball mill pulverizer. The Si-containing material may be obtained by thermally treating Si powder, silicon oxide powder, metal powder, or the like under a reduced-pressure atmosphere to cause the reactants in a gas phase to react and cooling the reaction product. When the Si-containing material is pulverized, particularly, using a ball mill rather than using a jet mill or the like, the elongation and circularity of the prepared silicon-based active material may fall within the ranges according to the present invention.

Meanwhile, the elongation and circularity of the silicon-based active material may be adjusted by pulverizing a Si-containing material using a ball mill pulverizer whose ball size ranges from 5 mm to 15 mm for 10 hours to 18 hours. Specifically, the elongation and circularity of the silicon-based active material may be adjusted by pulverizing a Si-containing material using a ball mill pulverizer whose ball size is 10 mm for 13 hours to 17 hours.

The silicon-based active material may have a BET specific surface area of 1 $m^2$/g to 60 $m^2$/g. When the BET specific surface area of the silicon-based active material is within the above-described range, it is possible to prevent side reactions between the silicon-based active material and an electrolyte solution, and thus the initial efficiency and lifetime characteristics of a battery can be improved. The specific surface area of the silicon-based active material may be measured by a Brunauer-Emmett-Teller (BET) method. For example, the specific surface area may be measured by the BET 6-point method by the nitrogen gas adsorption flow method using a porosimetry analyzer (BELSORP-mini II commercially available from Bel Japan Inc.).

The silicon-based active material may have an average particle diameter ($D_{50}$) of 0.01 $\mu$m to 30 $\mu$m, specifically 0.05 $\mu$m to 20 $\mu$m, and more specifically 0.1 $\mu$m to 10 $\mu$m. When the average particle diameter of the silicon-based active material satisfies the above-described range, a decrease in the density of the electrode is prevented, and thus appropriate capacity per volume can be achieved, and an electrode-forming slurry can be applied with a uniform thickness.

The silicon-based active material may be included at 0.1 wt% to 80 wt%, 5 wt% to 80 wt%, 0.1 wt% to 30 wt%, 1 wt% to 25 wt%, or 2 wt% to 20 wt% in the negative electrode active material layer. When the content of the silicon-based active material is within the above-described range, the initial efficiency and lifetime characteristics of the negative electrode and battery can be improved.

The silicon-based active material may include $SiO_x$ ($0 \leq x \leq 2$). When the silicon-based active material includes $SiO_x$ ($0 \leq x \leq 2$), battery capacity can be increased. More specifically, the silicon-based active material may be SiO or $SiO_2$. The SiO may be SiO having crystallinity. In this case, the excessive volume expansion of the silicon-based active material during charging and discharging of a battery is controlled, and thus the lifetime characteristics of the battery may be improved. $SiO_x$ ($0 \leq x \leq 2$) may be particles whose average particle diameter ($D_{50}$) is 1 $\mu$m to 15 $\mu$m. When the average particle diameter ($D_{50}$) of $SiO_x$ ($0 \leq x \leq 2$) particles is within the above-described range, side reactions between $SiO_x$ and an electrolyte solution are suppressed, and the reaction for formation of lithium silicate from $SiO_x$ ($0 \leq x \leq 2$) is controlled, and thus degradation of initial efficiency can be prevented, and initial capacity in electrode design can be maximally implemented.

The silicon-based active material may further include a metal silicate phase. The metal silicate may be formed by doping $SiO_x$ ($0 \leq x \leq 2$) with a metal, and the metal silicate phase means that the metal silicate is present in a domain form in the silicon-based active material. The metal silicate may, for example, be $Mg_2SiO_4$ or $MgSiO_3$. Also, the silicon-based active material may further include a metal silicide and a metal oxide. In this case, the metal silicide may be, for example, $Mg_2Si$, and the metal oxide may be, for example, MgO.

The metal may be an element selected from the group consisting of alkali metals, alkaline earth metals, transition metals, Group 13 elements, Group 14 elements, rare earth elements, and combinations thereof. Specifically, the metal may be one or more selected from among lithium (Li), magnesium (Mg), calcium (Ca), aluminum (Al), sodium (Na), and titanium (Ti) and is preferably Li and/or Mg. In this case, since binding between the metal element and oxygen of the metal silicate is stronger, the formation of lithium silicate from lithium supplied from a positive electrode during initial charging is prevented, and thus degradation of initial efficiency may be prevented.

The metal may be included at 0.1 wt% to 30 wt%, specifically 1 wt% to 25 wt%, more specifically 3 wt% to 20 wt%, and even more specifically 4 wt% to 15 wt%, in the silicon-based active material. When the content of the metal is within the above-described range, the silicon-based active material may have high capacity, and the initial efficiency of the silicon-based active material may also more effectively increased. The content of the metal may be determined by an inductively coupled plasma (ICP) analysis.

The metal may be in the form of a metal silicate or a metal oxide by reacting with silicon-based particles included in the silicon-based active material, specifically, $SiO_x$ ($0 \leq x \leq 2$) particles. Therefore, the silicon-based active material according to an embodiment of the present invention may include $SiO_x$ ($0 \leq x \leq 2$) and a metal compound phase including one or more selected from a metal oxide and a metal silicate.

The metal silicate may include a metal silicate of one or more selected from among the doping metals Li, Mg, Ca, Al, Na, and Ti. Specifically, the metal silicate includes a metal silicate of one or more selected from Li and Mg and more specifically includes magnesium (Mg) silicate.

The metal oxide may include a metal oxide of one or more selected from among the doping metals Li, Mg, Ca, Al, Na, and Ti. Specifically, the metal oxide includes a metal oxide of one or more selected from Li and Mg and more specifically includes magnesium (Mg) oxide.

The metal compound including one or more selected from the metal oxide and the metal silicate may be one or more metal compounds selected from among $Mg_2SiO_4$, $MgSiO_3$, $Mg_2Si$, and $MgO$.

The silicon-based active material may further include a carbon coating layer on the surface thereof. Specifically, the silicon-based active material may further include a carbon coating layer on the surface of $SiO_x$ ($0 \leq x \leq 2$). The carbon coating layer may cover at least a portion of the surface of the silicon-based active material. The carbon coating layer may allow the excessive volume expansion of the silicon-based active material during charging and discharging of a battery to be more effectively controlled and may increase the conductivity of the active material to further reduce the resistance of the negative electrode. In addition, when the carbon coating layer is included, the surface hardness of the silicon-based active material may be further increased, and the electrical conductivity of the silicon-based active material is enhanced so that charging and discharging uniformly occur, and thus a volume change during charging and discharging may be more effectively controlled.

The silicon-based active material further including the carbon coating layer on the surface thereof may have a BET specific surface area of 0.5 m$^2$/g to 15 m$^2$/g. Specifically, the silicon-based active material further including the carbon coating layer on the surface thereof may have a BET specific surface area of 1 m$^2$/g to 13 m$^2$/g or 2 m$^2$/g to 10 m$^2$/g. When the BET specific surface area of the silicon-based active material further including the carbon coating layer on the surface thereof is within the above-described range, it is possible to prevent side reactions between the silicon-based active material and an electrolyte solution, and thus the initial efficiency and lifetime characteristics of a battery can be improved.

The silicon-based active material may include the carbon coating layer on the surface thereof at 0.1 wt% to 50 wt%, specifically 1 wt% to 25 wt%, and more specifically 3 wt% to 15 wt%, with respect to the total weight of the silicon-based active material. When the content of the carbon coating layer satisfies the above-described range, the electrical conductivity of the silicon-based active material is enhanced so that charging and discharging uniformly occur, and thus a volume change during charging and discharging can be more effectively controlled.

The carbon coating layer may have a thickness of 1 nm to 200 nm, and specifically 5 nm to 100 nm. When the thickness of the carbon coating layer satisfies the above-described range, the electrical conductivity of the negative electrode can be enhanced while maintaining a conductive path in the negative electrode active material.

The negative electrode active material may further include a carbon-based negative electrode active material. The carbon-based negative electrode active material may include at least one selected from the group consisting of artificial graphite, natural graphite, and graphitized mesocarbon microbeads. Specifically, the carbon-based active material is preferably artificial graphite.

When the negative electrode active material includes both a silicon-based active material and a carbon-based negative electrode active material, the silicon-based active material and the carbon-based negative electrode active material may be included in a weight ratio of 5:95 to 20:80 or 10:90 to 20:80. When the weight ratio of the silicon-based active material and the carbon-based negative electrode active material satisfies the above-described range, battery capacity can be improved, and the volume change of the negative electrode active material, which may occur during charging and discharging of the negative electrode, can be suppressed to improve the lifespan of the negative electrode.

The binder may include at least one selected from the group consisting of a polyvinylidene fluoride-hexafluoropropylene copolymer (PVDF-co-HFP), polyvinylidene fluoride, polyacrylonitrile, polymethyl methacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, an ethylene-propylene-diene monomer (EPDM), a sulfonated EPDM, styrene butadiene rubber (SBR), fluoro-rubber, polyacrylic acid, and materials in which hydrogens thereof have been substituted with Li, Na, Ca, or the like, and also include various copolymers thereof.

The binder may be included at 30 wt% or less, and specifically 0.1 wt% to 30 wt%, in the negative electrode active material layer. When the content of the binder satisfies the above-described range, an adhesion effect resulting from the use of the binder can be exhibited, and a desired capacity per volume of the negative electrode can be maintained.

**<Secondary battery>**

A secondary battery according to another embodiment of the present invention includes a negative electrode, and the negative electrode is the same as the above-described negative electrode.

Specifically, the secondary battery may include: the negative electrode; a positive electrode; a separator interposed between the positive electrode and the negative electrode; and an electrolyte, and the negative electrode is the same as the above-described negative electrode. Since the negative electrode has been described above, detailed descriptions thereof will be omitted.

The positive electrode may include: a positive electrode current collector; and a positive electrode active material layer formed on the positive electrode current collector and including a positive electrode active material.

In the positive electrode, the positive electrode current collector is not particularly limited as long as it does not cause a chemical change in the battery and has conductivity. For example, stainless steel, aluminum, nickel, titanium, calcined carbon, or aluminum or stainless steel whose surface has been treated with carbon, nickel, titanium, silver, or the like may be used as the positive electrode current collector. In addition, the positive electrode current collector may typically have a thickness of 3 $\mu$m to 500 $\mu$m and have fine irregularities formed on the surface thereof to increase the adhesion of a positive electrode active material. Additionally, the positive electrode current collector may be used in any of various forms such as a film, a sheet, a foil, a net, a porous material, a foam, a non-woven fabric, and the like.

The positive electrode active material may be a typically used positive electrode active material. Specific examples of the positive electrode active material include: a layered compound such as a lithium cobalt oxide ($LiCoO_2$), a lithium nickel oxide ($LiNiO_2$), or the like or a compound substituted with one or more transition metals; a lithium iron oxide such as $LiFe_3O_4$; a lithium manganese oxide such as $Li_{1+c1}Mn_{2-c1}O_4$ ($0 \leq c1 \leq 0.33$), $LiMnO_3$, $LiMn_2O_3$, $LiMnO_2$, or the like; a lithium copper oxide ($Li_2CuO_2$); a vanadium oxide such as $LiV_3O_8$, $V_2O_5$, $Cu_2V_2O_7$, or the like; a Ni-site-type lithium nickel oxide represented by the chemical formula $LiNi_{1-c2}M_{c2}O_2$ (here, M is at least one selected from the group consisting of Co, Mn, Al, Cu, Fe, Mg, B, and Ga, and $0.01 \leq c2 \leq 0.3$ is satisfied); a lithium manganese composite oxide represented by the chemical formula $LiMn_{2-c3}M_{c3}O_2$ (here, M is at least one selected from the group consisting of Co, Ni, Fe, Cr, Zn, and Ta, and $0.01 \leq c3 \leq 0.1$ is satisfied) or $Li_2Mn_3MO_8$ (here, M is at least one selected from the group consisting of Fe, Co, Ni, Cu, and Zn); $LiMn_2O_4$ in which some Li ions in the chemical formula have been substituted with alkaline earth metal ions; and the like, but the present invention is not limited thereto. The positive electrode may be a Li metal.

The positive electrode active material layer may include a positive electrode conductive material and a positive electrode binder in addition to the above-described positive electrode active material.

In this case, the positive electrode conductive material is used to impart conductivity to the electrode, and any conductive material that does not cause a chemical change in the battery and has electron conductivity may be used without particular limitation. Specific examples of the conductive material include: graphite such as natural graphite, artificial graphite, or the like; a carbon-based material such as carbon black, acetylene black, Ketjen black, channel black, furnace black, lamp black, thermal black, carbon fiber, or the like; a metal powder or metal fiber containing copper, nickel, aluminum, silver, or the like; a conductive whisker such as zinc oxide, potassium titanate, or the like; a conductive metal oxide such as titanium oxide or the like; and a conductive polymer such as a polyphenylene derivative or the like, which may be used alone or in combination of two or more thereof.

In addition, the positive electrode binder serves to improve cohesion between positive electrode active material particles and adhesion between the positive electrode active material and the positive electrode current collector. Specific examples of the binder include polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated EPDM, styrene butadiene rubber (SBR), fluoro-rubber, and various copolymers thereof, which may be used alone or in combination of two or more thereof.

The separator serves to separate the negative electrode and the positive electrode and provide the passages through which lithium ions migrate, and any separator typically used as a separator in a secondary battery may be used without particular limitation. In particular, a separator that exhibits low resistance to the migration of electrolyte ions and has an excellent electrolyte impregnation ability is preferred. Specifically, a porous polymer film, for example, a porous polymer film made of a polyolefin-based polymer such as an ethylene homopolymer, a propylene homopolymer, an ethylene/butene copolymer, an ethylene/hexene copolymer, an ethylene/methacrylate copolymer, or the like or a stacked structure having two or more layers thereof, may be used. Alternatively, a typical porous non-woven fabric, for example, a non-woven fabric made of high-melting-point glass fiber, polyethylene terephthalate fiber, or the like may be used. Alternatively, a coated separator including a ceramic component or a polymer material to ensure heat resistance or mechanical strength may be used, and optionally, the separator may be used in a single-layer or multi-layer structure.

Examples of the electrolyte include an organic liquid electrolyte, an inorganic liquid electrolyte, a solid polymer electrolyte, a gel-type polymer electrolyte, an inorganic solid electrolyte, a molten-type inorganic electrolyte, and the like, which are usable in the manufacture of a lithium secondary battery, but the present invention is not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, $\gamma$-butyrolactone, 1,2-dimethoxyethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, dioxolane derivatives, sulfolane, methyl sulfolane, 1,3-dimethyl-2-imidazolidinone, propylene carbonate derivatives, tetrahydrofuran derivatives, ethers, methyl propionate, ethyl propionate, or the like may be used.

Among the carbonate-based organic solvents, especially, ethylene carbonate and propylene carbonate, which are cyclic carbonates, are preferably used because they are high-viscosity organic solvents and have high permittivity, thereby satisfactorily dissociating a lithium salt. When a mixture formed by mixing such cyclic carbonates with low-viscosity, low-permittivity linear carbonates such as dimethyl carbonate and diethyl carbonate in an appropriate ratio is used, an electrolyte having high electrical conductivity may be prepared. Therefore, the mixture is more preferably used.

As the metal salt, a lithium salt may be used, and the lithium salt is a substance that is easy to dissolve in the non-aqueous electrolyte solution. For example, as an anion of the lithium salt, one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$ may be used.

In addition to the above-described electrolyte components, the electrolyte may further include one or more additives selected from among a haloalkylene carbonate-based compound such as difluoroethylene carbonate and the like, pyridine, triethylphosphite, triethanolamine, cyclic ether, ethylenediamine, n-glyme, hexaphosphoric triamide, a nitrobenzene derivative, sulfur, a quinone imine dye, an N-substituted oxazolidinone, an N,N-substituted imidazolidine, an ethylene glycol dialkyl ether, an ammonium salt, pyrrole, 2-methoxyethanol, aluminum trichloride, and the like for the purpose of improving the lifetime characteristics of the battery, suppressing a reduction in battery capacity, improving the discharge capacity of the battery, and the like.

According to still another embodiment of the present invention, provided are a battery module including the above-described secondary battery as a unit cell and a battery pack including the same. Since the battery module and the battery pack include the secondary battery having high capacity, high rate characteristics, and cycle characteristics, they may be used as power sources of medium-to-large-sized devices selected from the group consisting of electric vehicles, hybrid electric vehicles, and plug-in hybrid electric vehicles, and a system for storing electric power.

Hereinafter, exemplary embodiments of the present invention will be described to facilitate understanding of the present invention. However, it is apparent to those skilled in the art that the exemplary embodiments proposed herein are intended to illustrate the present invention, and various changes and modifications can be made within the scope and technical spirit of the present invention, so that the present invention covers all such changes and modifications provided they are within the scope of the appended claims.

**Preparation Examples: Preparation of silicon-based active material**

**Preparation Example 1**

Powder including Si powder and silicon oxide ($SiO_2$) powder uniformly mixed in a molar ratio of 1:1 and magnesium (Mg) were thermally treated under a reduced-pressure atmosphere at 1400 °C and 700 °C, respectively, so that a silicon oxide vapor resulting from the Si and the silicon oxide and a magnesium vapor were generated at the same time to cause the reactants in a gas phase to react. The reaction product was cooled to induce precipitation, and then pulverization was performed by a ball mill using a 10-mm ball for 14 hours. Afterward, size classification was performed to collect a silicon-based active material having an average particle diameter (Dso) of 5 $\mu$m and including $MgSiO_3$ and $Mg_2SiO_4$.

The collected silicon-based active material was input into a tubular furnace and subjected to chemical vapor deposition (CVD) under a mixed gas of argon and methane to prepare a silicon-based active material including a carbon coating layer having a carbon content of 5 wt% formed on the surface thereof.

As a result of performing an inductively coupled plasma (ICP) analysis to determine the Mg content of the prepared silicon-based active material, it was found that the Mg content was 8 wt% with respect to the total weight of the silicon-based active material.

The elongation and circularity corresponding to 50% of the cumulative volume of 10,000 silicon-based active material particles were 0.25 and 0.94, respectively, as obtained by dispersing the silicon-based active material sample (1 mm³) under conditions of 4 bar and 10 ms, then capturing silicon-based active material particles as a two-dimensional image, and analyzing the image using a particle shape analyzer (Morphologi 4 commercially available from Malvern Panalytical Ltd.).

The silicon-based active material including a carbon coating layer formed thereon had a BET specific surface area of 4 $m^2$/g to 7 $m^2$/g.

**Preparation Examples 2 to 4**

Silicon-based active materials including a carbon coating layer formed thereon were prepared in the same manner as in Preparation Example 1 except that pulverization was performed by a ball mill for 16 hours, 6 hours, and 20 hours, respectively.

The elongation and circularity corresponding to 50% of the cumulative volume of 10,000 silicon-based active material particles were 0.20 and 0.97 for Preparation Example 2, 0.5 and 0.85 for Preparation Example 3, and 0.02 and 0.99 for Preparation Example 4, as obtained by dispersing each of the silicon-based active material samples (1 $mm^3$) prepared in Preparation Examples 2 to 4 under conditions of 4 bar and 10 ms, then capturing silicon-based active material particles as a two-dimensional image, and analyzing the image using a particle shape analyzer (Morphologi 4 commercially available from Malvern Panalytical Ltd.).

All of the silicon-based active materials including a carbon coating layer formed thereon, which were prepared in Preparation Examples 2 to 4, had a BET specific surface area of 4 $m^2$/g to 7 $m^2$/g.

**Preparation Example 5**

A silicon-based active material including a carbon coating layer formed thereon was prepared in the same manner as in Preparation Example 1 except that pulverization was performed by a jet mill, not a ball mill.

The elongation and circularity corresponding to 50% of the cumulative volume of 10,000 silicon-based active material particles were 0.39 and 0.93, respectively, as obtained by dispersing the silicon-based active material sample (1 $mm^3$) prepared in Preparation Example 5 under conditions of 4 bar and 10 ms, then capturing silicon-based active material particles as a two-dimensional image, and analyzing the image using a particle shape analyzer (Morphologi 4 commercially available from Malvern Panalytical Ltd.).

The silicon-based active material including a carbon coating layer formed thereon, which was prepared in Preparation Example 5, had a BET specific surface area of 4 $m^2$/g to 7 $m^2$/g.

**Preparation Example 6**

A silicon-based active material including a carbon coating layer formed thereon was prepared in the same manner as in Preparation Example 1 except that pulverization was performed by a ball mill using a 12-mm ball for 3 hours.

The elongation and circularity corresponding to 50% of the cumulative volume of 10,000 silicon-based active material particles were 0.25 and 0.88, respectively, as obtained by dispersing the silicon-based active material sample (1 $mm^3$) prepared in Preparation Example 6 under conditions of 4 bar and 10 ms, then capturing silicon-based active material particles as a two-dimensional image, and analyzing the image using a particle shape analyzer (Morphologi 4 commercially available from Malvern Panalytical Ltd.).

The silicon-based active material including a carbon coating layer formed thereon, which was prepared in Preparation Example 6, had a BET specific surface area of 4 $m^2$/g to 7 $m^2$/g.

**Examples and Comparative Examples**

**Example 1**

The silicon-based active material prepared in Preparation Example 1 as a negative electrode active material, carbon black as a conductive material, and polyacrylic acid (PAA) as a binder were mixed in a weight ratio of 80:10:10 in water ($H_2O$) as a solvent to prepare a uniform negative electrode slurry. The negative electrode slurry was applied onto one surface of a copper current collector, dried, and roll-pressed, and then the resultant was punched in a constant size to manufacture a negative electrode.

A Li metal was used as a counter electrode, a polyolefin separator was interposed between the negative electrode and the Li metal, and then an electrolyte prepared by dissolving 1M $LiPF_6$ in a solvent containing ethylene carbonate (EC) and diethyl carbonate (DEC) mixed in a volume ratio of 30:70 was injected, thereby manufacturing a coin-type half-cell of Example 1.

**Example 2**

A coin-type half-cell of Example 2 was manufactured in the same manner as in Example 1 except that the silicon-based active material prepared in Preparation Example 2 was used as a negative electrode active material.

**Example 3**

A negative electrode active material including the silicon-based active material prepared in Preparation Example 1 and natural graphite mixed in a weight ratio of 1:9, carbon black as a conductive material, and carboxymethylcellulose and styrene butadiene rubber (SBR) as binders were mixed in a weight ratio of 95.4:1:1.1:2.5 in water ($H_2O$) as a solvent to prepare a uniform a negative electrode slurry. The negative electrode slurry was applied onto one surface of a copper current collector, dried, and roll-pressed, and then the resultant was punched in a constant size to manufacture a negative electrode.

A positive electrode including $Li[Ni_{0.6}Co_{0.2}Mn_{0.2}]O_2$ as a positive electrode active material was used as a counter electrode, a polyolefin separator was interposed between the negative electrode and the positive electrode, and then an electrolyte prepared by dissolving 1M $LiPF_6$ in a solvent containing ethylene carbonate and diethyl carbonate mixed in a volume ratio of 30:70 was injected, thereby manufacturing a bi-cell-type lithium secondary battery of Example 3.

**Example 4**

A bi-cell-type lithium secondary battery of Example 4 was manufactured in the same manner as in Example 3 except that a negative electrode active material including the silicon-based active material prepared in Preparation Example 2 and natural graphite mixed in a weight ratio of 1:9 was used.

**Comparative Example 1**

A coin-type half-cell of Comparative Example 1 was manufactured in the same manner as in Example 1 except that the silicon-based active material prepared in Preparation Example 3 was used as a negative electrode active material.

**Comparative Example 2**

A coin-type half-cell of Comparative Example 2 was manufactured in the same manner as in Example 1 except that the silicon-based active material prepared in Preparation Example 4 was used as a negative electrode active material.

**Comparative Example 3**

A coin-type half-cell of Comparative Example 3 was manufactured in the same manner as in Example 1 except that the silicon-based active material prepared in Preparation Example 5 was used as a negative electrode active material

**Comparative Example 4**

A coin-type half-cell of Comparative Example 4 was manufactured in the same manner as in Example 1 except that the silicon-based active material prepared in Preparation Example 6 was used as a negative electrode active material

**Comparative Example 5**

A bi-cell-type lithium secondary battery of Comparative Example 5 was manufactured in the same manner as in Example 3 except that a negative electrode active material including the silicon-based active material prepared in Preparation Example 3 and natural graphite mixed in a weight ratio of 1:9 was used.

**Comparative Example 6**

A bi-cell-type lithium secondary battery of Comparative Example 6 was manufactured in the same manner as in Example 3 except that a negative electrode active material including the silicon-based active material prepared in Preparation Example 4 and natural graphite mixed in a weight ratio of 1:9 was used.

**Comparative Example 7**

A bi-cell-type lithium secondary battery of Comparative Example 7 was manufactured in the same manner as in Example 3 except that a negative electrode active material including the silicon-based active material prepared in Preparation Example 5 and natural graphite mixed in a weight ratio of 1:9 was used.

**Comparative Example 8**

A bi-cell-type lithium secondary battery of Comparative Example 8 was manufactured in the same manner as in Example 3 except that a negative electrode active material including the silicon-based active material prepared in Preparation Example 6 and natural graphite mixed in a weight ratio of 1:9 was used.

**Experimental Examples**

**Experimental Example 1: Evaluation of discharge capacity and initial efficiency**

Each of the coin-type half-cells of Examples 1 and 2 and Comparative Examples 1 to 4 was charged at 25 °C with a constant current (CC) of 0.1C up to 5 mV and then subjected to 1st charging that was performed with constant voltage (CV) up to a charge current of 0.005C (cut-off current). After maintaining the cell for 20 minutes and then performing discharging with a constant current (CC) of 0.1C up to 1.5 V, discharge capacity (mAh/g) and initial efficiency (%) were evaluated, and results thereof are shown in the following Table 1. Initial efficiency (%) was calculated by the following Formula 3.

[Formula 3]

Initial efficiency (%) = (Discharge capacity after 1st discharging/Initial charge

capacity) × 100

[Table 1]

|  | Discharge capacity (mAh/g) | Initial efficiency (%) |
|---|---|---|
| Example 1 | 1414 | 82.1 |
| Example 2 | 1420 | 82.3 |
| Comparative Example 1 | 1367 | 79.2 |
| Comparative Example 2 | 1412 | 82.0 |
| Comparative Example 3 | 1389 | 80.1 |
| Comparative Example 4 | 1353 | 79.0 |

Referring to Table 1, it can be seen that the cells of Examples 1 and 2, which included a silicon-based active material having an elongation of 0.05 to 0.35 and a circularity of 0.9 to 0.98, exhibited excellent initial efficiency and excellent discharge capacity due to prevention of side reactions with an electrolyte solution, as compared to the cells of Comparative Examples 1 to 4 which included a silicon-based active material whose elongation and/or circularity did not satisfy the ranges according to the present invention.

**Experimental Example 2: Evaluation of capacity retention rate and electrode thickness increase rate**

Each of the bi-cell-type lithium secondary batteries of Examples 3 and 4 and Comparative Examples 5 to 8 was charged and discharged. Then, a capacity retention rate and an electrode thickness increase rate were evaluated, and results thereof are shown in Table 2 below.

Specifically, each of the bi-cell-type lithium secondary batteries of Examples 3 and 4 and Comparative Examples 5 to 8 was charged at 25 °C with a constant current (CC) of 1C up to 4.25 V and then subjected to 1st charging that was performed with constant voltage (CV) up to a charge current of 0.05C (cut-off current). After maintaining the battery for 20 minutes, the battery was discharged with a constant current (CC) of 1C up to 2.5 V. This cycle was repeated 50 times, and then a capacity retention rate was evaluated, and after the 51th charging, the thickness of the electrode was measured, and a thickness increase rate was evaluated. A capacity retention rate and an electrode thickness variation were calculated by the following Formulas 4 and 5, respectively.

[Formula 4]

Capacity retention rate (%) = (Discharge capacity after 50$^{th}$ cycle/Discharge capacity at 1$^{st}$ cycle) × 100

[Formula 5]

Electrode thickness variation (%) = (Negative electrode thickness variation after 51$^{st}$ charging/Initial negative electrode thickness) × 100

[Table 2]

| | Capacity retention rate (%) | Electrode thickness variation (%) |
|---|---|---|
| Example 3 | 92.7 | 51.8 |
| Example 4 | 93.5 | 50.2 |
| Comparative Example 5 | 85.4 | 65.9 |
| Comparative Example 6 | 86.9 | 62.3 |
| Comparative Example 7 | 87.3 | 64.5 |
| Comparative Example 8 | 85.1 | 66.3 |

Referring to Table 2, it can be seen that the secondary batteries of Examples 3 and 4, which included a silicon-based active material having an elongation of 0.05 to 0.35 and a circularity of 0.9 to 0.98, exhibited excellent capacity retention rates and low electrode thickness variations compared to the secondary batteries of Comparative Examples 5 to 8 which included a silicon-based active material whose elongation and/or circularity did not satisfy the ranges according to the present invention. Accordingly, in the case of the secondary battery including a silicon-based active material having an elongation of 0.05 to 0.35 and a circularity of 0.9 to 0.98, it can be seen that the active material is hardly cracked and broken due to volume expansion during roll pressing and charging/discharging, and few side reactions with an electrolyte solution on the active material surface occur.

**Claims**

1. A negative electrode comprising:

    a current collector; and
    a negative electrode active material layer disposed on the current collector,
    wherein the negative electrode active material layer includes a conductive material, a negative electrode active material, and a binder,
    the negative electrode active material includes a silicon-based active material having an elongation of 0.05 to 0.35 and a circularity of 0.9 to 0.98 as measured using a particle shape analyzer, and
    the elongation is defined by the following Formula 1.

[Formula 1]

Elongation = 1 - Aspect ratio

2. The negative electrode of claim 1, wherein the silicon-based active material has an elongation of 0.15 to 0.35 and a circularity of 0.92 to 0.98.

3. The negative electrode of claim 1, wherein the silicon-based active material includes $SiO_x$ ($0 \leq x \leq 2$).

4. The negative electrode of claim 1, wherein the silicon-based active material further includes a metal silicate phase formed by doping with a metal.

5. The negative electrode of claim 4, wherein the metal is one or more selected from among lithium, magnesium, calcium, aluminum, sodium, and titanium.

6. The negative electrode of claim 4, wherein the metal is included at 0.1 wt% to 30 wt% in the silicon-based active material.

7. The negative electrode of claim 1, wherein the silicon-based active material is included at 0.1 wt% to 80 wt% in the negative electrode active material layer.

8. The negative electrode of claim 1, wherein the silicon-based active material has a BET specific surface area of 1 $m^2/g$ to 60 $m^2/g$.

9. The negative electrode of claim 1, wherein the silicon-based active material further includes a carbon coating layer on a surface thereof.

10. A secondary battery comprising the negative electrode according to any one of claim 1 to claim 9.

[FIG. 1]

| | CIRCULARITY | ELONGATION |
|---|---|---|
| | 0.47 | 0.24 |
| | 0.52 | 0.79 |
| | 0.47 | 0.82 |

## INTERNATIONAL SEARCH REPORT

International application No.

**PCT/KR2020/018535**

| A. | CLASSIFICATION OF SUBJECT MATTER |
|---|---|

**H01M 4/131**(2010.01)i; **H01M 4/48**(2010.01)i; **H01M 4/58**(2010.01)i; **H01M 4/36**(2006.01)i; **H01M 4/62**(2006.01)i; **H01M 4/587**(2010.01)i; **H01M 10/052**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/131(2010.01); H01M 10/052(2010.01); H01M 10/0525(2010.01); H01M 10/054(2010.01); H01M 4/13(2010.01); H01M 4/1395(2010.01); H01M 4/48(2010.01); H01M 4/485(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극(anode), 원형도(circularity), 종횡비(aspect ratio), 실리콘(silicon), 입형(grain shape)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2014-0012351 A (MK ELECTRON CO., LTD.) 03 February 2014 (2014-02-03) See claims 1, 8 and 13; paragraphs [0049] and [0063]-[0068]; and table 2. | 1-6,10 |
| Y | | 7-9 |
| Y | KR 10-2015-0062918 A (SHENZHEN BTR NEW ENERGY MATERIALS INC.) 08 June 2015 (2015-06-08) See claims 1 and 2. | 7-9 |
| A | KR 10-2017-0068444 A (NEXEON LTD) 19 June 2017 (2017-06-19) See entire document. | 1-10 |
| A | KR 10-2014-0147708 A (SHIN-ETSU CHEMICAL CO., LTD.) 30 December 2014 (2014-12-30) See entire document. | 1-10 |

☑ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **23 March 2021** | **24 March 2021** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
| --- |
| **PCT/KR2020/018535** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-2019-0047196 A (LG CHEM, LTD.) 08 May 2019 (2019-05-08)<br>See entire document. | 1-10 |

Form PCT/ISA/210 (second sheet) (July 2019)

**INTERNATIONAL SEARCH REPORT**
**Information on patent family members**

International application No.

**PCT/KR2020/018535**

| Patent document cited in search report | | | Publication date (day/month/year) | Patent family member(s) | | | Publication date (day/month/year) |
|---|---|---|---|---|---|---|---|
| KR | 10-2014-0012351 | A | 03 February 2014 | KR | 10-1430709 | B1 | 14 August 2014 |
| | | | | US | 2014-0023928 | A1 | 23 January 2014 |
| KR | 10-2015-0062918 | A | 08 June 2015 | CN | 103647056 | A | 19 March 2014 |
| | | | | CN | 103647056 | B | 08 February 2017 |
| | | | | JP | 2015-106563 | A | 08 June 2015 |
| | | | | JP | 6235430 | B2 | 22 November 2017 |
| KR | 10-2017-0068444 | A | 19 June 2017 | CN | 106537656 | A | 22 March 2017 |
| | | | | EP | 3183764 | A1 | 28 June 2017 |
| | | | | GB | 2529411 | A | 24 February 2016 |
| | | | | JP | 2017-531276 | A | 19 October 2017 |
| | | | | US | 2017-0133674 | A1 | 11 May 2017 |
| | | | | WO | 2016-027079 | A1 | 25 February 2016 |
| KR | 10-2014-0147708 | A | 30 December 2014 | CN | 104241652 | A | 24 December 2014 |
| | | | | CN | 104241652 | B | 14 May 2019 |
| | | | | JP | 2015-005377 | A | 08 January 2015 |
| | | | | JP | 5967024 | B2 | 10 August 2016 |
| | | | | US | 2014-0377647 | A1 | 25 December 2014 |
| | | | | US | 9972832 | B2 | 15 May 2018 |
| KR | 10-2019-0047196 | A | 08 May 2019 | CN | 111226329 | A | 02 June 2020 |
| | | | | EP | 3683872 | A2 | 22 July 2020 |
| | | | | EP | 3683872 | A4 | 28 October 2020 |
| | | | | US | 2020-0243853 | A1 | 30 July 2020 |
| | | | | WO | 2019-083332 | A2 | 02 May 2019 |
| | | | | WO | 2019-083332 | A3 | 13 June 2019 |

Form PCT/ISA/210 (patent family annex) (July 2019)

**EP 4 037 013 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020190169170